# DEMANDE DE BREVET EUROPEEN

(11) **EP 1 529 438 A1**
(43) Date de publication de la demande: **11.05.2005**
(21) Numéro de dépôt: 04105310.9
(22) Date de dépôt: 26.10.2004
(51) Int. Cl.: A01G 13/02

(54) **Dispositif de couverture d'un espace à protéger du soleil et/ou des précipitations**

(30) Priorité: 05.11.2003 FR 0350787
(71) Demandeur: Mangeard, Philippe, 06100 Nice (FR)
(72) Inventeur: Mangeard, Philippe, 06100 Nice (FR)
(74) Mandataire: Hautier, Jean-Louis

(57) **Abrégé**

La présente invention concerne un dispositif de couverture d'un espace à protéger du soleil et/ou des précipitations, comportant une structure de support de moyens de couverture, caractérisé par le fait que les moyens de couverture comportent une pluralité d'éléments couvrants (1) juxtaposés et présentant un profil déformable pour modifier la largeur des éléments couvrants (1) pour régler la surface de couverture.

## Description

La présente invention concerne un dispositif de couverture d'un espace à protéger du soleil et/ou des précipitations et/ou des agressions diverses.

L'invention trouvera particulièrement son application dans le domaine de la couverture de grandes et moyennes surfaces et en particulier dans les domaines agricole, horticole et maraîcher.

*On connaît du document WO-A-02*/*072972 un dispositif de régulation de l'ensoleillement comportant une structure de couverture de l'espace* à *protéger du soleil et des moyens d'actionnement de la couverture dans un mouvement périodique situé dans son plan. Ce dispositif comporte au moins une nappe avec une répartition des propriétés de transmission lumineuse pour réguler l'ensoleillement de la surface couverte.*

Le dispositif selon cette antériorité donne globalement satisfaction mais il est apparu au demandeur qu'il pouvait être amélioré.

Dans ce cadre, la présente invention propose un dispositif de couverture doté de moyens de couverture spécifiques sous forme d'une pluralité d'éléments couvrants de configuration particulière.

Un des avantages de l'invention est la possibilité de réglage du taux de couverture de l'espace à protéger tout en maintenant la légèreté et la simplicité du dispositif. Par ailleurs, on notera la bonne applicabilité à des couvertures de très grandes surfaces sur une longueur de plusieurs dizaines de mètres.

D'autres buts et avantages apparaîtront au cours de la description qui suit d'un mode préféré de réalisation de l'invention qui n'a cependant pas pour but de la limiter.

La présente invention concerne un dispositif de couverture d'un espace à protéger du soleil et/ou des précipitations et/ou des agressions diverses, comportant une structure de support de moyens de couverture, caractérisé par le fait que les moyens de couverture comportent une pluralité d'éléments couvrants juxtaposés et présentant un profil déformable pour modifier la largeur des éléments couvrants pour régler la surface de couverture.

De façon préférée, le dispositif selon l'invention pourra se présenter selon les variantes énoncées ci-après :
- les éléments couvrants présentent un profil concave déformable.
- les éléments couvrants sont des bandes souples.
- les éléments couvrants présentent un profil en dents de scie déformable.
- les éléments couvrants sont en une matière élastiquement déformable dans le sens de leur largeur.
- les éléments couvrants sont montés sur la structure de support par l'intermédiaire d'au moins deux organes longitudinaux de suspension.
- les éléments couvrants sont montés sur chaque organe de suspension par deux moyens de montage dont au moins un est modifiable en position sur l'organe de suspension.
- en parallèle à chaque organe de suspension, il comporte au moins un moyen de réglage solidaire d'un moyen de montage mobile de chaque élément couvrant pour les actionner simultanément.
- le moyen de réglage est entraîné en translation par un moyen d'actionnement.
- le moyen de réglage est un câble et le moyen d'actionnement est une poulie ou un levier enroulant le câble
- le câble comporte, à son extrémité opposée où la poulie, un organe de rappel.
- il comporte des moyens d'actionnement des éléments couvrants dans un mouvement de translation alternative.
- les organes de suspension sont des câbles.
- il comporte des poulies permettant chacune l'enroulement ou le déroulement d'une extrémité de câble et des moyens pour actionner les poulies dans un mouvement de rotation alternative synchrone.
- les moyens pour actionner les poulies présentent au moins un moteur électrique, alimenté par capteurs solaires.
- la structure comporte des montants de support vertical répartis le long de chaque organe de suspension.
- les éléments couvrants sont inclinés suivant leur longueur.
- il comporte une gouttière à l'extrémité la plus basse des éléments couvrants, pour la récupération des eaux de pluie.

Les dessins ci-joints sont donnés à titre d'exemples et ne sont pas limitatifs de l'invention. Ils représentent seulement un mode de réalisation de l'invention et permettront de la comprendre aisément.

La figure 1 illustre le dispositif de l'invention avec des moyens de couverture en position sensiblement ouverte.

La figure 2 illustre le dispositif selon le mode de réalisation de la figure 1 en position sensiblement fermée, et la figure 3 en position intermédiaire d'ouverture partielle.

Les figures 4 et 5 montrent un mode de réalisation préféré pour le réglage de l'ouverture et de la fermeture des moyens de couverture.

En référence aux figures, le dispositif ici décrit comporte une structure de support présentant dans l'exemple figuré deux portiques 14, 15, par exemple mécano-soudés, de maintien en position de jeux de poulies 6a-6b, 7a-7b, reliées par paires par l'intermédiaire d'axes 12, 13, chaque jeu de poulies étant situé sensiblement chacun à une extrémité du dispositif selon la longueur.

Les jeux de poulies 6a-6b, 7a-7b, et les axes 12, 13 sont en position sensiblement parallèles.

L'ensemble ainsi formé permet le support de moyens de couverture ici sous forme d'éléments couvrants 1 juxtaposés montés sur la structure de support par l'intermédiaire d'organes de suspension 3a-3b, par exemple sous forme de câbles. Les organes de suspension 3a-3b s'orientent sensiblement selon la longueur du dispositif, les éléments couvrants 1 étant orientés sensiblement transversalement.

Suivant la nature des organes de suspension 3a-3b (en particulier lorsque leur moment d'inertie en flexion est faible, comme c'est le cas de câbles), il est possible de rajouter à la structure de supports une pluralité de montants ou suspentes 16, orientés verticalement et constituant des reprises d'effort intermédiaires le long des organes de suspension 3a-3b. Les montants 16 sont répartis selon la longueur du dispositif.

Les éléments couvrants 1 sont réalisés de sorte qu'ils puissent être modifiés pour passer d'une position fermée à une position ouverte et inversement et, préférentiellement prendre par ailleurs des positions intermédiaires. Le profil des éléments est réalisé de sorte à permettre l'ouverture et la fermeture. Suivant une possibilité les éléments couvrants 1 sont élastiquement déformables dans le sens de la largeur (par exemple en tissus élastiques) pour être tendus ou détendus.

Suivant une autre possibilité les éléments couvrants 1 ont un profil en dents de scie déformable tel un soufflet d'accordéon.

Les figures annexées présentent une troisième possibilité.

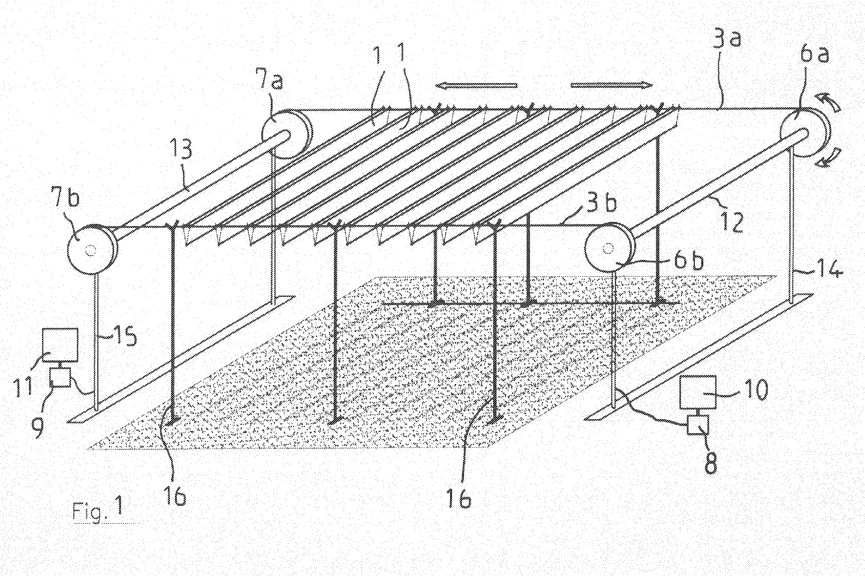

En effet, le profil des éléments couvrants 1 est réalisé de façon concave et déformable pour modifier leur largeur. Tel qu'illustré en figure 1, le profil des éléments couvrants est sensiblement en forme de V d'une faible largeur de façon à avoir une surface de couverture minimale.

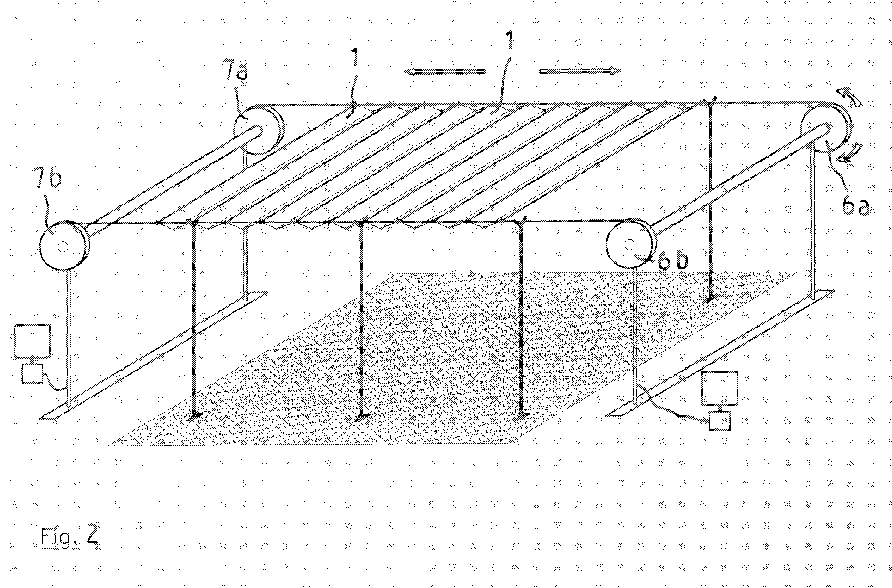

Au contraire, en figure 2, le profil est en forme de V de grande largueur, les éléments couvrants 1 juxtaposés venant en contact les uns des autres pour avoir une surface de couverture maximale. On notera que la zone de contact entre les éléments couvrants peut comprendre des moyens d'étanchéité pour augmenter la protection de la surface à protéger vis-à-vis des précipitations.

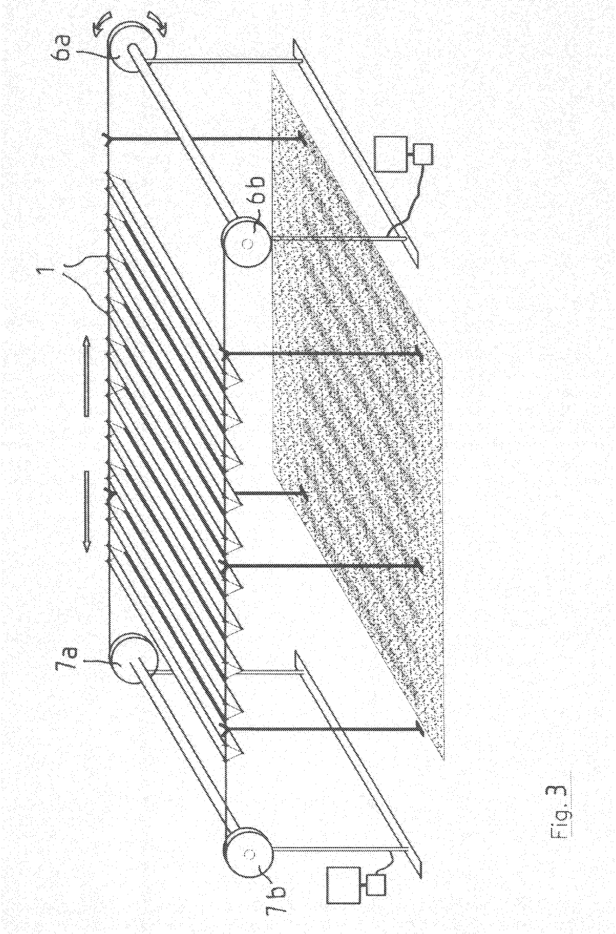

Dans la position illustrée à la figure 3, les éléments couvrants 1 ont un profil intermédiaire permettant une surface de couverture à mi-chemin entre la position ouverte et fermée.

On pourra par exemple utiliser des éléments couvrants 1 sous forme de bandes en matière plastique du type polymère ou en tissus présentant une bonne capacité d'étanchéité. Il n'est pas nécessaire que les éléments couvrants 1 aient un profil en forme de V avec une pointe à la base, les éléments couvrants pouvant présenter un profil concave sensiblement en arc de cercle ou pour le moins curviligne.

Par ailleurs, les éléments couvrants peuvent présenter suivant leurs longueurs et à chacune des extrémités supérieures du V un organe allongé du renfort, par exemple sous forme de tige en matière plastique ou en acier permettant leur rigidification dans le sens transversal au dispositif.

Suivant un mode préféré de réalisation, les moyens de couverture ainsi réalisés peuvent être actionnés dans un mouvement de translation alternative.

A cet effet, dans le cas illustré, les poulies organisées par paires 6a-6b, 7a-7b permettent l'enroulement et le déroulement alternatif d'une extrémité de chacun des câbles 3a-3b. Bien entendu, les paires de poulies 6a-6b, 7a-7b sont actionnées dans un mouvement de rotation synchrone. Pour y parvenir, on peut par exemple utiliser des motorisations distinctes mais synchronisées sous forme de moteurs 8, 9, alimentés en énergie par l'intermédiaire de capteurs solaires 10, 11. Le dispositif ainsi réalisé est de ce fait énergétiquement autonome. On peut aussi utiliser des moteurs mécaniques ou hydrauliques.

Le mouvement de translation alternative produit permet une régulation et une répartition de l'ensoleillement sur l'espace à protéger.

En ce qui concerne la protection aux intempéries, on opère avantageusement une inclinaison du dispositif de façon à ce que les éléments couvrants soient inclinés. Leurs profils concaves assurent une récupération des eaux issues des précipitations, eaux qui peuvent être évacuées par exemple par l'intermédiaire d'une gouttière (non représentée) placée à l'extrémité la plus basse des éléments couvrants 1.

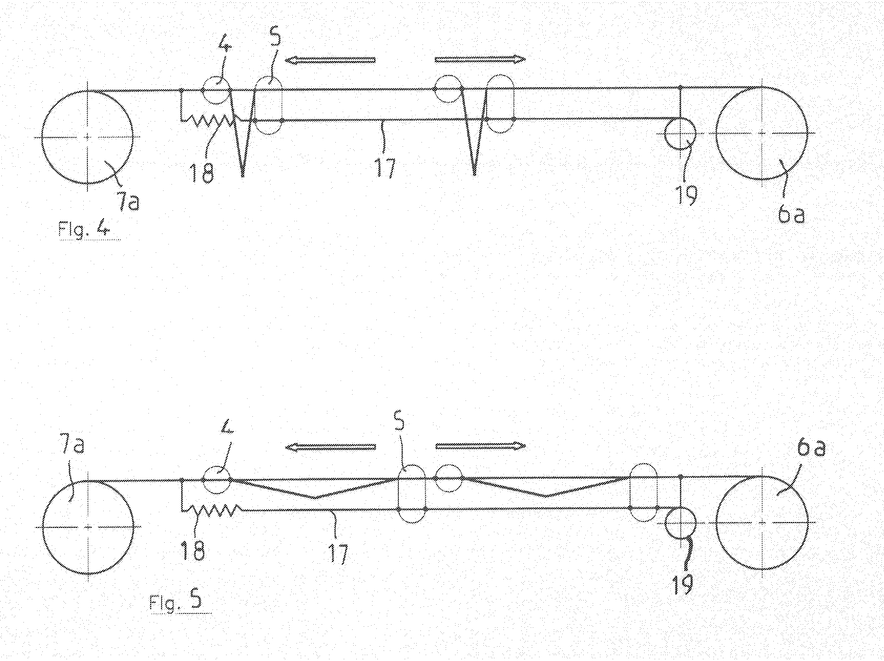

On décrit ci-après une possibilité de réalisation du réglage en ouverture et en fermeture des éléments couvrants 1, et ce en référence aux figures 4 et 5.

Dans ce cadre, pour chaque élément couvrant 1, une extrémité supérieure du profil concave est positionnée fixement sur l'organe de suspension (câble 3a ou 3b). D'autre part, l'autre extrémité supérieure du profil concave est montée libre en translation sur l'organe de suspension 3a-3b. Ce montage est réalisé par l'intermédiaire d'un moyen de montage fixe 4 et d'un moyen de montage mobile 5, notamment représenté en figures 4 et 5.

Ce système de fixation et le système de réglage qui sera décrit par la suite est bien entendu symétrique pour opérer une modification en ouverture ou en fermeture similaire de part et d'autre des éléments couvrants 1.

Le moyen de fixation mobile 5 est lui-même solidaire d'un moyen de réglage entraîné en translation par un moyen d'actionnement. Par exemple, le moyen de réglage peut être un câble 17 monté en enroulement et en déroulement sur une poulie 19 elle-même motorisée. L'enroulement sur la poulie 19 permet le déplacement en translation du câble 17 et consécutivement le déplacement en translation des moyens de fixation mobile 5 le long des organes de suspension 3a, 3b. Un organe de rappel 18, sous forme d'un ressort ou d'un élastique, placé à l'autre extrémité du câble de réglage 17 et monté solidairement à l'organe de suspension assure le retour en position par défaut (par exemple en position d'ouverture maximale dans le cas représenté aux figures 4 et 5) lorsque le câble de réglage 17 est déroulé de la poulie 19.

La figure 5 montre un dispositif de l'invention lorsque le câble 17 a été enroulé sur la poulie 19 pour fermer la surface de couverture.

On notera que l'on peut fixer la poulie 19 directement sur l'organe de suspension de façon à ne pas nécessiter un élément de support additionnel.

On réalise ainsi une couverture facilement adaptable aux conditions météorologiques, réglable suivant l'ensoleillement ou les précipitations ou les agressions diverses et d'une structure légère permettant l'application à de grandes ou de moyennes surfaces, par exemple des surfaces cultivées.

### REFERENCES

- 1.: Eléments couvrants
- 2.: Profil concave
- 3a-3b.: Organe de suspension
- 4.: Moyen de montage fixe
- 5.: Moyen de montage mobile
- 6a-6b.: Poulie
- 7a-7b: Poulie
- 8.: Moteur
- 9.: Moteur
- 10.: Capteur solaire
- 11.: Capteur solaire
- 12.: Axe
- 13.: Axe
- 14.: Portique
- 15.: Portique
- 16.: Montant
- 17.: Câble de réglage
- 18.: Ressort de rappel
- 19.: Poulie de réglage

## Revendications

1. Dispositif de couverture d'un espace à protéger du soleil et/ou des précipitations et/ou diverses agressions, comportant une structure de support de moyens de couverture, **caractérisé par le fait**
**que** les moyens de couverture comportent une pluralité d'éléments couvrants (1) juxtaposés et présentant un profil déformable pour modifier la largeur des éléments couvrants (1) pour régler la surface de couverture.

2. Dispositif, selon la revendication 1, **caractérisé par le fait**
**que** les éléments couvrants (1) présentent un profil concave déformable.

3. Dispositif, selon la revendication 2, **caractérisé par le fait que**
les éléments couvrants (1) sont des bandes souples.

4. Dispositif, selon la revendication 1, **caractérisé par le fait**
**que** les éléments couvrants (1) présentent un profil en dents de scie déformable.

5. Dispositif, selon la revendication 1, **caractérisé par le fait**
**que** les éléments couvrants (1) sont en une matière élastiquement déformable dans le sens de leur largeur.

6. Dispositif, selon l'une des revendications 1 à 5, **caractérisé par le fait**
**que** les éléments couvrants (1) sont montés sur la structure de support par l'intermédiaire d'au moins deux organes longitudinaux de suspension (3a, 3b).

7. Dispositif, selon la revendication 6, **caractérisé par le fait**
**que** les éléments couvrants sont montés sur chaque organe de suspension (3a, 3b) par deux moyens de montage (4, 5) dont au moins un est modifiable en position sur l'organe de suspension (3a, 3b).

8. Dispositif, selon la revendication 7, **caractérisé par le fait**
**qu'**en parallèle à chaque organe de suspension, il comporte au moins un moyen de réglage solidaire d'un moyen de montage mobile (5) de chaque élément couvrant (1) pour les actionner simultanément.

9. Dispositif, selon la revendication 8, **caractérisé par le fait**
**que** le moyen de réglage est entraîné en translation par un moyen d'actionnement.

10. Dispositif, selon la revendication 9 **caractérisé par le fait que** :
- le moyen de réglage est un câble (17) et le moyen d'actionnement est une poulie (19) ou un levier enroulant le câble (17)
- le câble (17) comporte, à son extrémité opposée où la poulie (19), un organe de rappel (18).

11. Dispositif, selon l'une quelconque des revendications 1 à 10, **caractérisé par le fait**
**qu'**il comporte des moyens d'actionnement des éléments couvrants (1) dans un mouvement de translation alternative.

12. Dispositif, selon l'une quelconque des revendications 1 à 11, **caractérisé par le fait**
**que** les organes de suspension (3a, 3b) sont des câbles.

13. Dispositif, selon la revendication 11 et la revendication 12 en combinaison, **caractérisé par le fait**
**qu'**il comporte des poulies (6a, 6b ; 7a, 7b) permettant chacune l'enroulement ou le déroulement d'une extrémité de câble et des moyens pour actionner les poulies (6a, 6b ; 7a, 7b) dans un mouvement de rotation alternative synchrone.

14. Dispositif, selon la revendication 13, **caractérisé par le fait**
**que** les moyens pour actionner les poulies (6a, 6b ; 7a, 7b) présentent au moins un moteur électrique (8, 9) alimenté par capteurs solaires (10, 11).

15. Dispositif, selon l'une quelconque des revendications 1 à 14, **caractérisé par le fait**
**que** la structure comporte des montants (16) de support vertical répartis le long de chaque organe de suspension (3a, 3b).

16. Dispositif, selon l'une quelconque des revendications 1 à 15, **caractérisé par le fait que** les éléments couvrants (1) sont inclinés suivant leur longueur.

17. Dispositif, selon l'une quelconque des revendications 1 à 16, **caractérisé par le fait**
**qu'**il comporte une gouttière à l'extrémité la plus basse des éléments couvrants (1), pour la récupération des eaux de pluie.
